# EUROPÄISCHE PATENTANMELDUNG

(11) **EP 4 578 620 A1**
(43) Veröffentlichungstag der Anmeldung: **02.07.2025**
(21) Anmeldenummer: 24220121.8
(22) Anmeldetag: 16.12.2024
(51) Int. Cl.: B29C 45/00, B29C 45/14, B29C 45/16, B44C 1/22, B60R 13/04, F21S 43/50

(54) **VERFAHREN ZUR HERSTELLUNG EINES PARTIELL DURCHLEUCHTBAREN KUNSTSTOFFPANELS, INSBESONDERE FRONTPANELS FÜR EIN FAHRZEUG**

(30) Priorität: 28.12.2023 DE 102023136760
(71) Anmelder: REHAU Automotive SE & Co. KG, 95111 Rehau (DE)
(72) Erfinder: Beyerlein, Patrick, 95111 Rehau (DE); Friese, Dominik, 95111 Rehau (DE); Jäger, Christoph, 95111 Rehau (DE); Kätzel, Patrick, 95111 Rehau (DE); Leister, Christian, 95030 Hof (DE)

(57) **Zusammenfassung**

Die Erfindung betrifft ein Verfahren zur Herstellung eines partiell durchleuchtbaren Frontpanels für ein Fahrzeug, umfassend die folgenden Schritte: Bereitstellen eines das Frontpanel definierenden Grundkörpers (1), wobei der Grundkörper (1) aus einem für sichtbares Licht transparenten oder transluzenten Kunststoffmaterial besteht und eine bestimmungsgemäße Sichtseite (A) und eine der Sichtseite (A) gegenüberliegenden Rückseite (B) aufweist, Aufbringen wenigstens einer lichtundurchlässigen Beschichtung (2) auf die Sichtseite (A) des Grundkörpers (1), Einbringen einer Vielzahl von Perforationen (3) in die Beschichtung, wobei die Perforationen (3) die Beschichtung (2) vollständig durchdringen, um hierdurch eine Durchleuchtbarkeit des Grundkörpers (1) zu ermöglichen, Aufbringen einer die Beschichtung (2) und die Perforationen (3) versiegelnden Versiegelungsschicht (4), wobei die Versiegelungsschicht (4) Polyurethan umfasst oder aus Polyurethan ist, wobei das transparente oder transluzente Kunststoffmaterial des Grundkörpers (1) Polypropylen umfasst oder Polypropylen ist.

## Beschreibung

Die vorliegende Erfindung betrifft ein Verfahren zur Herstellung eines partiell durchleuchtbaren Kunststoffpanels, insbesondere Frontpanels für ein Fahrzeug, umfassend die folgenden Schritte: Bereitstellen eines das Kunststoffpanel, insbesondere Frontpanel definierenden Grundkörpers, wobei der Grundkörper aus einem für sichtbares Licht transparenten oder transluzenten Kunststoffmaterial besteht und eine bestimmungsgemäße Sichtseite und eine der Sichtseite gegenüberliegenden Rückseite aufweist, Aufbringen wenigstens einer lichtundurchlässigen Beschichtung auf die Sichtseite des Grundkörpers, Einbringen einer Vielzahl von Perforationen in die Beschichtung, wobei die Perforationen die Beschichtung vollständig durchdringen, um hierdurch eine Durchleuchtbarkeit des Grundkörpers zu ermöglichen, Aufbringen einer die Beschichtung und die Perforationen versiegelnden Versiegelungsschicht, wobei die Versiegelungsschicht Polyurethan umfasst oder aus Polyurethan ist.

Ein Frontpanel ist derjenige Teil eines Fahrzeugs an deren Stelle sich bei Verbrennungsfahrzeugen der Kühlergrill befunden hat. Insbesondere bei Elektrofahrzeugen ist dieses Frontpanel nicht mehr als Lufteinlass zu dem Kühler (den es hier nicht mehr gibt) ausgebildet, sondern als Designelement in der Fahrzeugmitte vorgesehen. Das erfindungsgemäße Kunststoffpanel kann alternativ am Heck oder auf den Seiten des Fahrzeugs angeordnet sein.

Derartige Kunststoffpanele, insbesondere ein Frontpanel sind beispielsweise aus den Dokumenten DE 10 2020 000 921 A1 oder DE 10 2017 214 943 A1 vorbekannt. Nachteilig an derartigen Frontpanelen ist das Kunststoffmaterial, aus welchem diese Frontpanele bestehen. Das verwendete PMMA, Polycarbonat oder Acrylglas macht es schwierig verschiedene Zulassungsbedingungen wie z.B. Fußgängerschutz oder Pendeltests zu erfüllen.

Aufgabe der vorliegenden Erfindung ist daher ein Kunststoffpanel, insbesondere ein Frontpanel und ein Verfahren zur Herstellung eines Kunststoffpanels, insbesondere Frontpanels anzugeben, welches bessere mechanische Eigenschaften aufweist.

Diese Aufgabe wird vorliegend gelöst durch ein Verfahren zur Herstellung eines partiell durchleuchtbaren Kunststoffpanels, insbesondere Frontpanels für ein Fahrzeug, umfassend die folgenden Schritte:
- Bereitstellen eines das Kunststoffpanel, insbesondere Frontpanel definierenden Grundkörpers, wobei der Grundkörper aus einem für sichtbares Licht transparenten oder transluzenten Kunststoffmaterial besteht und eine bestimmungsgemäße Sichtseite und eine der Sichtseite gegenüberliegenden Rückseite aufweist,
- Aufbringen wenigstens einer lichtundurchlässigen Beschichtung auf die Sichtseite des Grundkörpers,
- Einbringen einer Vielzahl von Perforationen in die Beschichtung, wobei die Perforationen die Beschichtung vollständig durchdringen, um hierdurch eine Durchleuchtbarkeit des Grundkörpers zu ermöglichen,
- Aufbringen einer die Beschichtung und die Perforationen versiegelnden Versiegelungsschicht, wobei die Versiegelungsschicht Polyurethan umfasst oder aus Polyurethan ist,
wobei das transparente oder transluzente Kunststoffmaterial des Grundkörpers Polypropylen umfasst oder Polypropylen ist.

Das sichtbare Licht, auch als Licht- oder Farbspektrum bezeichnet, ist der Teil des elektromagnetischen Spektrums, den das menschliche Auge wahrnehmen kann. Es reicht von Rot (etwa 760 nm) bis Violett (etwa 380 nm). Vorliegend bedeutet der Begriff "aus einem für sichtbares Licht transparenten oder transluzenten Kunststoffmaterial", dass wenigstens eine Wellenlänge - aber nicht zwingend alle Wellenlängen - aus dem Licht- oder Farbspektrum das Kunststoffmaterial passieren kann.

Ein Material wird als transparent bezeichnet, wenn es von Licht im sichtbaren Bereich durchdrungen werden kann. Ein Element mit einem Transmissionsgrad von bis etwa 90% gilt noch als transparent. Ein Element wird als transluzent bezeichnet, wenn es von Licht im sichtbaren Bereich durchdrungen wird, dabei aber keine klare Unterscheidung von Objekten mehr zulässt, die sich hinter dem Element befinden. Ein Element mit einem Transmissionsgrad bis etwa 30% gilt noch als transluzent. Der Transmissionsgrad eines Materials bzw. Bauteils ist der Anteil des Lichtstroms, der durch das Material bzw. Bauteil hindurchgeht. Der Transmissionsgrad ist also das Verhältnis der vom Material oder dem Bauteil durchgelassenen Lichtintensität zur einfallenden Lichtintensität und nimmt Werte zwischen 0% und 100% an.

Das Aufbringen der wenigstens einen lichtundurchlässigen Beschichtung kann vorzugsweise die Schritte des Aufbringens einer Grundierungsschicht (auch Primer genannt) auf dem Grundkörper und das Aufbringen wenigstens einer farbgebenden Schicht (auch Base-Coat genannt) auf die Grundierungsschicht umfassen.

Das Aufbringen der wenigstens einen lichtundurchlässigen Beschichtung kann vorzugsweise ein Folienapplikationsverfahren oder ein Verfahren zum Aufbringen einer Lackschicht, insbesondere ein Sprühlackierverfahren oder ein Tampondruckverfahren umfassen. Die Beschichtung kann aus einer oder mehreren Folien bestehen.

Das Einbringen der Perforationen kann bevorzugt mittels eines Laserstrahls oder mittels mehrerer Laserstrahlen erfolgen.

Das Bereitstellen des Grundkörpers kann insbesondere durch ein Spritzgussverfahren oder ein Spritzprägeverfahren erfolgen.

Bei dem Spritzgießen oder Spritzprägen des Grundkörpers kann eine Dekorfolie und/oder eine Funktionsfolie von dem Kunststoffmaterial zur Herstellung des Grundkörpers hinterspritzt, umspritzt oder überspritzt werden.

Die Funktionsfolie kann hierbei wenigstens einen Heizdraht oder wenigstens einen Antennendraht oder wenigstens eine elektrische Schaltung oder wenigstens eine Leuchtdiode aufweisen.

Das Aufbringen der Versiegelungsschicht kann insbesondere in einem Spritzgussverfahren oder durch ein Flutungsverfahren oder durch ein Tauchverfahren oder durch ein Reaction Injection Moulding-Verfahren (RIM) erfolgen.

Der Grundkörper weist bevorzugt eine Wandstärke im Bereich von 0,8 mm bis 5,5 mm, vorzugsweise im Bereich von 1,3 mm bis 2,8 mm auf.

Teil der Erfindung ist ferner ein partiell durchleuchtbares Kunststoffpanel, insbesondere Frontpanel für ein Fahrzeug, insbesondere hergestellt mit dem vorstehend beschriebenen Verfahren, wobei das Kunststoffpanel, insbesondere Frontpanel einen das Kunststoffpanel, insbesondere Frontpanel definierenden Grundkörper aufweist, wobei der Grundkörper aus einem für sichtbares Licht transparenten oder transluzenten Kunststoffmaterial besteht und eine bestimmungsgemäße Sichtseite und eine der Sichtseite gegenüberliegenden Rückseite aufweist, wobei eine lichtundurchlässige Beschichtung auf der Sichtseite des Grundkörpers angeordnet ist, wobei die Beschichtung eine Vielzahl von Perforationen aufweist, wobei die Perforationen die Beschichtung vollständig durchdringen, um hierdurch eine Durchleuchtbarkeit des Grundkörpers zu ermöglichen, wobei eine Versiegelungsschicht vorgesehen ist, welche die Beschichtung und die Perforationen versiegelt, wobei die Versiegelungsschicht Polyurethan umfasst oder aus Polyurethan ist und, wobei das transparente oder transluzente Kunststoffmaterial des Grundkörpers Polypropylen umfasst oder Polypropylen ist.

Das Kunststoffpanel, insbesondere das Frontpanel kann zusätzlich bei einer Beleuchtung von der Innenseite her in wenigstens einem Leuchtbereich partiell durchleuchtbar ausgebildet sein, indem wenigstens eine Lichtquelle hinter der Rückseite des Kunststoffpanels, insbesondere des Frontpanels angeordnet wird. Auf der Versiegelungsschicht kann wenigstens eine zusätzliche Schutzschicht vorgesehen sein, insbesondere eine Schutzschicht die ein Silan oder eine Silanverbindung umfasst. Die Schutzschicht kann insbesondere eine Beschädigung durch Steinschläge oder abrasive Medien vermindern.

### Ausführungsbeispiele

Im Folgenden wird die Erfindung anhand lediglich Ausführungsbeispiele darstellender Zeichnungen erläutert. Es zeigen schematisch:

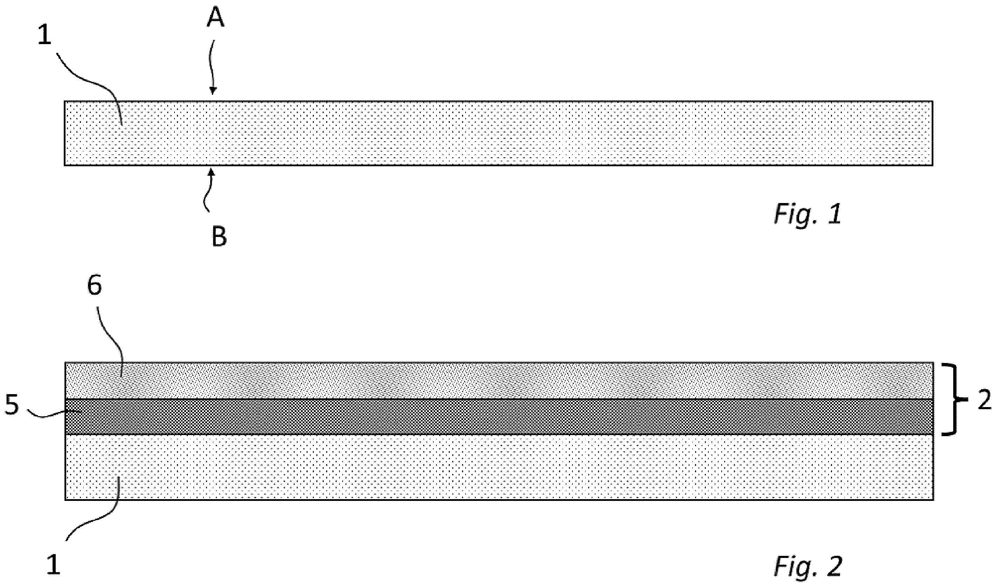

- Fig. 1-4: schematische Darstellungen der einzelnen Verfahrensschritte des erfindungsgemäßen Verfahrens.

In den Figuren werden gleiche oder funktionsgleiche Elemente mit den gleichen Bezugszeichen versehen.

Die nachfolgenden Abbildungen zeigen stark schematisierte Querschnitte durch die verschiedenen Stufen eines Kunststoffpanels in Gestalt eines Frontpanels während dessen Herstellung.

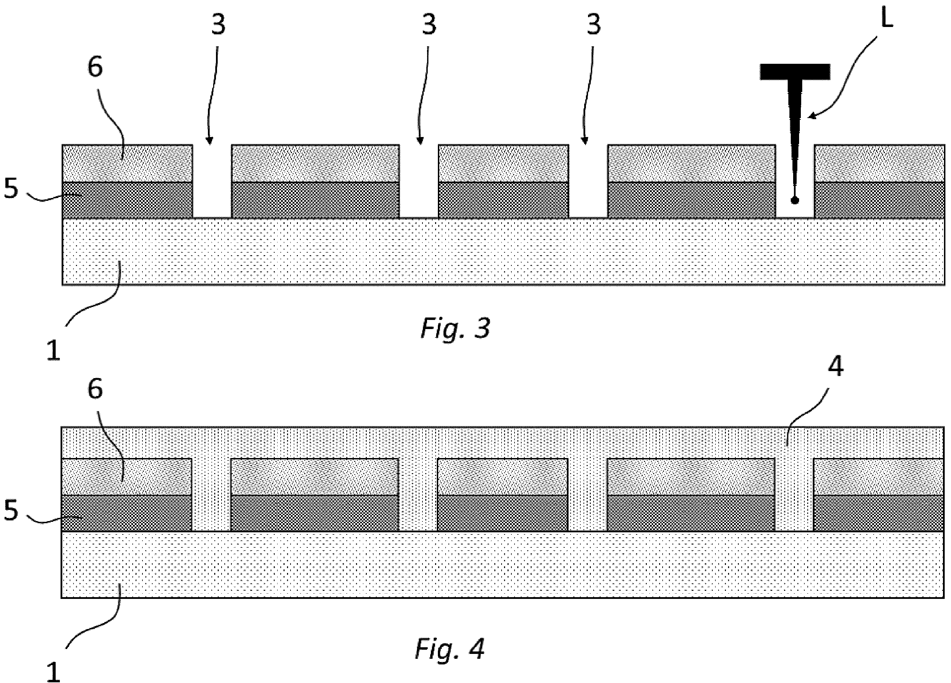

Das Verfahren zur Herstellung eines partiell durchleuchtbaren Frontpanels für ein Fahrzeug, umfasst die folgenden Schritte:
- Bereitstellen eines das Frontpanel definierenden Grundkörpers 1, wobei der Grundkörper 1 aus einem für sichtbares Licht transparenten oder transluzenten Kunststoffmaterial besteht und eine bestimmungsgemäße Sichtseite A und eine der Sichtseite A gegenüberliegenden Rückseite B aufweist (vgl. Fig. 1),
- Aufbringen wenigstens einer lichtundurchlässigen Beschichtung 2 auf die Sichtseite A des Grundkörpers 1 (vgl. Fig. 2),
- Einbringen einer Vielzahl von Perforationen 3 in die Beschichtung, wobei die Perforationen 3 die Beschichtung 2 vollständig durchdringen, um hierdurch eine Durchleuchtbarkeit des Grundkörpers 1 zu ermöglichen (vgl. Fig. 3),
- Aufbringen einer die Beschichtung 2 und die Perforationen 3 versiegelnden Versiegelungsschicht 4, wobei die Versiegelungsschicht 4 Polyurethan umfasst oder aus Polyurethan ist (vgl. Fig. 4),
wobei das transparente oder transluzente Kunststoffmaterial des Grundkörpers 1 Polypropylen umfasst oder Polypropylen ist.

Das Aufbringen der wenigstens einen lichtundurchlässigen Beschichtung 2 kann (wie vorliegend dargestellt) die Schritte des Aufbringens einer Grundierungsschicht 5 auf dem Grundkörper 1 und das Aufbringen wenigstens einer farbgebenden Schicht 6 auf die Grundierungsschicht 5 umfassen.

Das Aufbringen der wenigstens einen lichtundurchlässigen Beschichtung 2 kann mittels eines Folienapplikationsverfahrens oder eines Verfahrens zum Aufbringen einer Lackschicht, insbesondere mittels eines Sprühlackierverfahren oder eines Tampondruckverfahrens erfolgen.

Das Einbringen der Perforationen 3 erfolgt mittels eines Laserstrahls L oder mittels mehrerer Laserstrahlen (vgl. Fig. 3).

Das Bereitstellen des Grundkörpers 1 kann beispielsweise durch ein Spritzgussverfahren oder ein Spritzprägeverfahren erfolgen.

Bei dem Spritzgießen oder bei dem Spritzprägen des Grundkörpers 1 kann eine Dekorfolie und/oder eine Funktionsfolie von dem Kunststoffmaterial zur Herstellung des Grundkörpers 1 hinterspritzt, umspritzt oder überspritzt werden (hier nicht im Detail dargestellt). Die Funktionsfolie kann wenigstens einen Heizdraht oder wenigstens einen Antennendraht oder wenigstens eine elektrische Schaltung oder wenigstens eine Leuchtdiode aufweisen.

Das Aufbringen der Versiegelungsschicht 4 kann insbesondere in einem Spritzgussverfahren oder durch ein Flutungsverfahren oder durch ein Tauchverfahren oder durch ein Reaction Injection Moulding-Verfahren (RIM) erfolgen.

Der Grundkörper 1 kann eine Wandstärke im Bereich von 0,8 mm bis 5,5 mm aufweisen (wobei in den gezeigten Fig. 1 bis 4 die Relation zu den Dicken der Beschichtung und der Versiegelungsschicht zu der Dicke des Grundkörpers nicht maßstabsgetreu ist).

In der Fig. 4 ist das fertige, partiell durchleuchtbare Frontpanel für ein Fahrzeug dargestellt, insbesondere hergestellt mit dem vorstehend beschriebenen Verfahren, wobei das Frontpanel einen das Frontpanel definierenden Grundkörper 1 aufweist, wobei der Grundkörper 1 aus einem für sichtbares Licht transparenten oder transluzenten Kunststoffmaterial besteht und eine bestimmungsgemäße Sichtseite A und eine der Sichtseite A gegenüberliegenden Rückseite B aufweist, wobei eine lichtundurchlässige Beschichtung 2 auf der Sichtseite A des Grundkörpers 1 angeordnet ist, wobei die Beschichtung 2 eine Vielzahl von Perforationen 3 aufweist, wobei die Perforationen 3 die Beschichtung 2 vollständig durchdringen, um hierdurch eine Durchleuchtbarkeit des Grundkörpers 1 zu ermöglichen, wobei eine Versiegelungsschicht 4 vorgesehen ist, welche die Beschichtung 2 und die Perforationen 3 versiegelt, wobei die Versiegelungsschicht 4 Polyurethan umfasst oder aus Polyurethan ist und, wobei das transparente oder transluzente Kunststoffmaterial des Grundkörpers 1 Polypropylen umfasst oder Polypropylen ist.

Das vorstehend als Frontpanel beschriebene Kunststoffpanel, kann mit den gleichen Merkmalen auch als ein Heckpanel oder ein Seitenpanel eines Fahrzeugs ausgebildet sein.

## Patentansprüche

1. Verfahren zur Herstellung eines partiell durchleuchtbaren Kunststoffpanels, insbesondere Frontpanels für ein Fahrzeug, umfassend die folgenden Schritte:
- Bereitstellen eines das Kunststoffpanel, insbesondere Frontpanel definierenden Grundkörpers (1), wobei der Grundkörper (1) aus einem für sichtbares Licht transparenten oder transluzenten Kunststoffmaterial besteht und eine bestimmungsgemäße Sichtseite (A) und eine der Sichtseite (A) gegenüberliegenden Rückseite (B) aufweist,
- Aufbringen wenigstens einer lichtundurchlässigen Beschichtung (2) auf die Sichtseite (A) des Grundkörpers (1),
- Einbringen einer Vielzahl von Perforationen (3) in die Beschichtung, wobei die Perforationen (3) die Beschichtung (2) vollständig durchdringen, um hierdurch eine partielle Durchleuchtbarkeit des Grundkörpers (1) zu ermöglichen,
- Aufbringen einer die Beschichtung (2) und die Perforationen (3) versiegelnden Versiegelungsschicht (4), wobei die Versiegelungsschicht (4) Polyurethan umfasst oder aus Polyurethan ist,
wobei das transparente oder transluzente Kunststoffmaterial des Grundkörpers (1) Polypropylen umfasst oder Polypropylen ist.

2. Verfahren nach Anspruch 1, **dadurch gekennzeichnet, dass** das Aufbringen der wenigstens einen lichtundurchlässigen Beschichtung (2) die Schritte des Aufbringens einer Grundierungsschicht (5) auf dem Grundkörper (1) und das Aufbringen wenigstens einer farbgebenden Schicht (6) auf die Grundierungsschicht (5) umfasst.

3. Verfahren nach Anspruch 1 oder 2, **dadurch gekennzeichnet, dass** das Aufbringen der wenigstens einer lichtundurchlässigen Beschichtung (2) ein Folienapplikationsverfahren oder ein Verfahren zum Aufbringen einer Lackschicht, insbesondere ein Sprühlackierverfahren oder ein Tampondruckverfahren umfasst.

4. Verfahren nach einem der vorstehenden Ansprüche, **dadurch gekennzeichnet, dass** das Einbringen der Perforationen (3) mittels eines Laserstrahls (L) oder mittels mehrerer Laserstrahlen erfolgt.

5. Verfahren nach einem der vorstehenden Ansprüche, **dadurch gekennzeichnet, dass** das Bereitstellen des Grundkörpers (1) durch ein Spritzgussverfahren oder ein Spritzprägeverfahren erfolgt.

6. Verfahren nach Anspruch 5, **dadurch gekennzeichnet, dass** bei dem Spritzgießen oder bei dem Spritzprägen des Grundkörpers (1) eine Dekorfolie und/oder eine Funktionsfolie von dem Kunststoffmaterial zur Herstellung des Grundkörpers (1) hinterspritzt, umspritzt oder überspritzt wird.

7. Verfahren nach Anspruch 6, **dadurch gekennzeichnet, dass** die Funktionsfolie wenigstens einen Heizdraht oder wenigstens einen Antennendraht oder wenigstens eine elektrische Schaltung oder wenigstens eine Leuchtdiode aufweist.

8. Verfahren nach einem der vorstehenden Ansprüche, **dadurch gekennzeichnet, dass** das Aufbringen der Versiegelungsschicht (4) in einem Spritzgussverfahren oder durch ein Flutungsverfahren oder durch ein Tauchverfahren oder durch ein Reaction Injection Moulding-Verfahren (RIM) erfolgt.

9. Verfahren nach einem der vorstehenden Ansprüche, **dadurch gekennzeichnet, dass** der Grundkörper (1) eine Wandstärke im Bereich von 0,8 mm bis 5,5 mm aufweist.

10. Partiell durchleuchtbares Kunststoffpanel, insbesondere Frontpanel für ein Fahrzeug, insbesondere hergestellt mit dem Verfahren nach einem der Ansprüche 1 bis 9, **dadurch gekennzeichnet, dass** das Kunststoffpanel, insbesondere Frontpanel einen das Kunststoffpanel, insbesondere Frontpanel definierenden Grundkörper (1) aufweist, wobei der Grundkörper (1) aus einem für sichtbares Licht transparenten oder transluzenten Kunststoffmaterial besteht und eine bestimmungsgemäße Sichtseite (A) und eine der Sichtseite (A) gegenüberliegenden Rückseite (B) aufweist, wobei eine lichtundurchlässige Beschichtung (2) auf der Sichtseite (A) des Grundkörpers (1) angeordnet ist, wobei die Beschichtung (2) eine Vielzahl von Perforationen (3) aufweist, wobei die Perforationen (3) die Beschichtung (2) vollständig durchdringen, um hierdurch eine Durchleuchtbarkeit des Grundkörpers (1) zu ermöglichen, wobei eine Versiegelungsschicht (4) vorgesehen ist, welche die Beschichtung (2) und die Perforationen (3) versiegelt, wobei die Versiegelungsschicht (4) Polyurethan umfasst oder aus Polyurethan ist und, wobei das transparente oder transluzente Kunststoffmaterial des Grundkörpers (1) Polypropylen umfasst oder Polypropylen ist.
